# EUROPEAN PATENT APPLICATION

(11) **EP 0 977 066 A1**
(43) Date of publication of application: **02.02.2000**
(21) Application number: 99202317.6
(22) Date of filing: 14.07.1999
(51) Int. Cl.: G02B 7/182

(54) **Radiation-beam manipulator having a pretensioned thrust bearing**

(30) Priority: 27.07.1998 EP 98202509
(71) Applicant: Koninklijke Philips Electronics N.V., 5621 BA Eindhoven (NL)
(72) Inventor: Verhoeven, Erik Cornelis Maria, 5656 AA Eindhoven (NL); Dankers, Johannes Adrianus Hendrik, 5656 AA Eindhoven (NL); Jansen, Gerardus Lucien Mathildus, 5656 AA Eindhoven (NL); Raaijmakers, Ronald, 5656 AA Eindhoven (NL); Hafez, Moustapha, 5656 AA Eindhoven (NL)
(74) Representative: van der Veer, Johannis Leendert

(57) **Abstract**

The invention relates to a radiation-beam manipulator (1) comprising a first part (3) and a second part (7) with a mirror surface (21) which is pivotable relative to the first part about at least one pivot axis (29,31). The manipulator further comprises a system of actuators (35,37,39,41) for pivoting the second part about said pivot axis, said system of actuators comprising a system of electric coils (43,45,47,49) and a system of permanent magnets (51,53,55,57) co-operating with the system of coils. In accordance with the invention, the second part is pivotably journaled relative to the first part by means of a bearing (5,9) comprising a thrust surface (15) and a further bearing part (25) co-operating with said thrust surface, which further bearing part is pretensioned relative to the thrust surface by means of a system of magnetizable elements (59,61,63,65) exerting a magnetic pretension force upon the permanent magnets of the system of actuators parallel to a support axis (67) of the bearing. The magnetizable elements also exert a magnetic torque (M_{z}) upon said permanent magnets about said support axis.

The manipulator is used in a laser-processing device (69) for selectively deflecting a laser beam (93) to a piece of work (75) to be processed.

## Description

The invention relates to a radiation-beam manipulator comprising a first part, which includes a first bearing portion, and a second part, which includes a mirror and a second bearing portion for co-operation with said first bearing portion, said second part being pivotably journaled relative to the first part about at least one pivot axis by means of the two bearing portions, and being pivotable relative to the first part about the pivot axis by means of a system of actuators, said system of actuators being provided with a system of electric coils, which is attached to one of said parts, and with a first system of magnetizable elements which, for co-operation with the system of electric coils, is attached to the other part.

The invention also relates to a laser-processing device comprising a holder, a laser source, a radiation-beam manipulator for deflecting a radiation beam supplied, during operation, by the laser source towards a workpiece which can be arranged on the holder during operation, and a positioning device for positioning the holder and the radiation-beam manipulator relative to each other.

A radiation-beam manipulator of the type mentioned in the opening paragraphs is known from EP-A-0 790 512. The system of magnetizable elements of the known radiation-beam manipulator comprises a ferromagnetic support which belongs to the second part and on which the mirror is provided. Said ferromagnetic support is secured to a conical further support which is pivotably journaled relative to the first part by means of a spherical bearing. The system of electric coils of the known radiation-beam manipulator is secured to the first part and includes four electric coils which are arranged around the spherical bearing so as to form a square, each coil being combined with a ferromagnetic core to form an electromagnet. By selectively energizing the four electric coils, the four electromagnets exert a selective attractive force on the ferromagnetic support of the mirror, so that the second part including the mirror is pivotable relative to the first part about two mutually perpendicular pivot axes. The known radiation-beam manipulator can be applied, for example, in a laser-processing device for processing a workpiece by means of a laser beam, the mirror being used to deflect the laser beam towards the workpiece. Since the mirror is pivotable about the two mutually perpendicular pivot axes, a processing spot of the laser beam can be positioned on the workpiece in two directions, so that at least a part of the workpiece can be processed by means of the laser beam.

A drawback of the known radiation-beam manipulator is that the first bearing portion and the second bearing portion of the spherical bearing used therein exert a substantial frictional force on each other, thus adversely affecting the accuracy and the rate with which a radiation beam can be manipulated by the known radiation-beam manipulator. In addition, as a result of the use of said spherical bearing, the first part and the second part of the known radiation-beam manipulator cannot be readily separated from each other, so that the assembly and disassembly of the mirror is hampered. Since the mirror has to be regularly cleaned or even replaced as a result of contamination or ageing, it is desirable that the mirror can be readily assembled and disassembled.

It is an object of the invention to provide a radiation-beam manipulator of the type mentioned in the opening paragraphs, wherein the above-mentioned drawbacks of the known radiation-beam manipulator are precluded as much as possible.

To achieve this, the radiation-beam manipulator in accordance with the invention is characterized in that one of the two bearing portions is provided with a thrust surface by means of which the second part is supported, relative to the first part, in a direction parallel to a support direction extending perpendicularly to the pivot axis, while the other bearing portion is pretensioned, parallel to the support direction, relative to the thrust surface by means of a second system of magnetizable elements which, for co-operation with the first system of magnetizable elements, is attached to the part to which the electric coil system is attached, at least one of the two systems of magnetizable elements comprising a system of permanent magnets. By using the second system of magnetizable elements, which co-operates with the first system of magnetizable elements, both bearing portions are pretensioned, in a direction parallel to the support direction, relative to the thrust surface by means of a magnetic pretension force which both systems of magnetizable elements exert upon each other viewed in a direction parallel to the support direction. The use of said thrust surface enables both parts of the radiation-beam manipulator in accordance with the invention to be readily separated from each other by separating both parts against the pretension force of the two systems of magnetizable elements, viewed parallel to the support direction. The assembly of both parts also takes place in a simple manner by moving both bearing portions towards each other, viewed in a direction parallel to the support direction, whereafter both parts of the radiation-beam manipulator are held in an operational position relative to each other under the influence of the pretension force of the two systems of magnetizable elements. Apart from a pretension force directed parallel to the support direction, the two systems of magnetizable elements also exert a magnetic torque on each other about a supporting axis extending parallel to the support direction. Said torque can be used to fix a position which both parts of the radiation-beam manipulator occupy relative to each other viewed about said supporting axis. As a result, the second system of magnetizable elements has a dual function, so that a practical and efficient structure of the radiation-beam manipulator is provided. By using said thrust bearing, the two bearing portions exert a relatively small frictional force on each other, so that the accuracy and the rate with which a radiation beam can be manipulated by the radiation-beam manipulator in accordance with the invention is influenced as little as possible by said frictional force.

A particular embodiment of a radiation-beam manipulator in accordance with the invention is characterized in that the first system of magnetizable elements includes a system of permanent magnets. By virtue of the fact that, for co-operation with the system of electric coils, the first system of magnetizable elements includes a system of permanent magnets, the system of actuators with which the second part can be pivoted relative to the first part supplies relatively large drive forces and the system of actuators has a relatively high efficiency.

A further embodiment of a radiation-beam manipulator in accordance with the invention is characterized in that the second part comprises a plate-shaped support having a first main side, which is provided with a mirror surface, and a second main side, to which the second bearing portion and the first system of magnetizable elements are attached. By a suitable relative arrangement of the plate-shaped support, the second bearing portion and the first system of magnetizable elements, the second part in this further embodiment of the radiation-beam manipulator in accordance with the invention has a center of gravity which lies substantially on the pivot axis. As a result, both in the case of relatively low-frequency pivot movements and relatively high-frequency pivot movements of the second part relative to the first part, an optimal dynamic behavior of the radiation-beam manipulator is achieved.

Yet another embodiment of a radiation-beam manipulator in accordance with the invention is characterized in that the second part is pivotable, relative to the first part, about two mutually perpendicular pivot axes, the thrust surface being conical, while the other bearing portion includes at least a part of a ball surface for co-operation with the conical thrust surface. By using the conical thrust surface and the ball surface, it is achieved in a simple and practical manner that the second part is pivotably journaled, relative to the first part, about said two mutually perpendicular pivot axes. In addition, by using said conical thrust surface and the ball surface, a position which the second part occupies, viewed in directions parallel and perpendicular to the support direction, relative to the first part is fixed in an accurate manner.

A particular embodiment of a radiation-beam manipulator in accordance with the invention is characterized in that the second pan is tiltable, relative to the first part, about two mutually perpendicular pivot axes, the first system of magnetizable elements being provided with a first pair of permanent magnets, which are magnetized parallel to the support direction and, viewed parallel to one of the two pivot axes, are attached, equidistantly from and on either side of the second bearing portion, to the second part, and a second pair of permanent magnets which are magnetized parallel to the support direction and, viewed parallel to the other pivot axis, are attached, equidistantly from and on either side of the second bearing portion, to the second part, while the system of electric coils includes four electric coils which are attached to the first part for co-operation with, respectively, one of the four permanent magnets, and the second system of magnetizable elements includes four magnetizable elements which are attached to the first part near, respectively, one of the four electric coils. As a result of said construction of the first system of magnetizable elements and the system of electric coils, the co-operation of the system of electric coils with the first pair of permanent magnets results in a relatively high mechanical driving torque about one of the two pivot axes, while the co-operation of the system of electric coils with the second pair of permanent magnets results in a relatively high mechanical driving torque about the other pivot axis. In addition, by the co-operation of the four permanent magnets with the four magnetizable elements, a relatively high mechanical torque about the supporting axis is obtained, so that the position of both parts of the radiation-beam manipulator relative to each other, viewed about the supporting axis, is fixed in a very stable manner.

A laser-processing device of the type mentioned in the opening paragraphs is generally known and used, and is employed to process a workpiece by means of a radiation beam supplied by a laser source. In operation, a radiation-beam supplied by the laser source of the laser-processing device is deflected by the radiation-beam manipulator towards a workpiece arranged on the holder. The radiation beam can be manipulated, by means of the radiation-beam manipulator, in two directions and through limited angles, so that a processing spot of the radiation beam can be positioned on the workpiece in two directions and over limited distances, and at least a part of the workpiece can be processed by means of the radiation beam. Since the holder and the radiation-beam manipulator can be positioned relative to each other by means of the positioning device of the laser-processing device, also other parts of the workpiece can be reached by the radiation-beam manipulator.

The laser-processing device in accordance with the invention is characterized in that the radiation-beam manipulator employed therein is a radiation-beam manipulator in accordance wit the invention. The use of the radiation-beam manipulator in accordance with the invention enables a workpiece arranged on the holder to be processed in a relatively accurate and rapid manner, and it enables a simple and practical construction of the laser-processing device to be achieved.

These and other aspects of the invention will be apparent from and elucidated with reference to the embodiments described hereinafter.

In the drawings:
Fig. 1 is a schematic plan view of a radiation-beam manipulator in accordance with the invention,
Fig. 2 is a schematic, sectional view taken on the line II-II in Fig. 1, and
Fig. 3 schematically shows a laser-processing device in accordance with the invention.

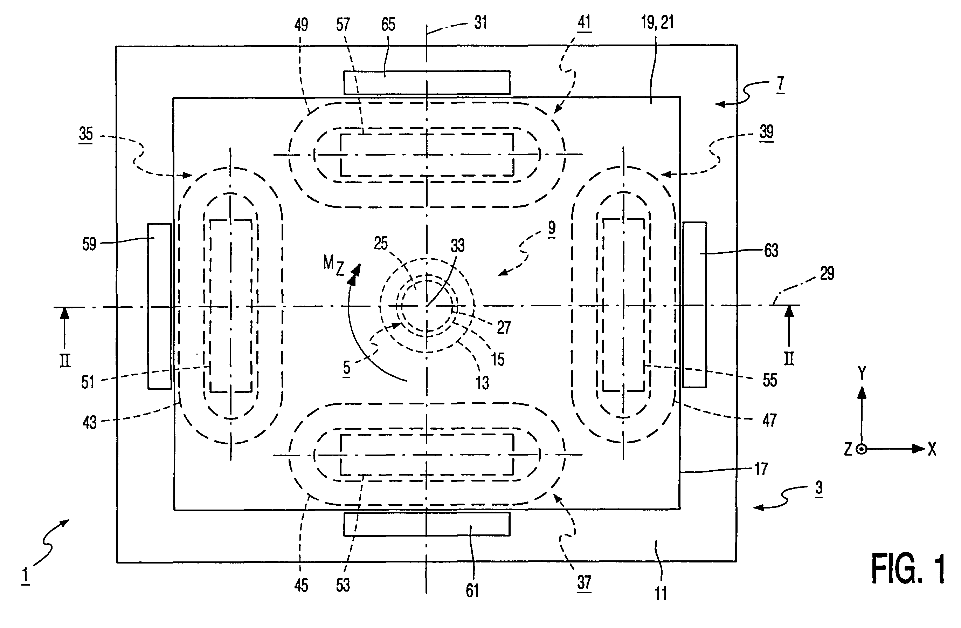

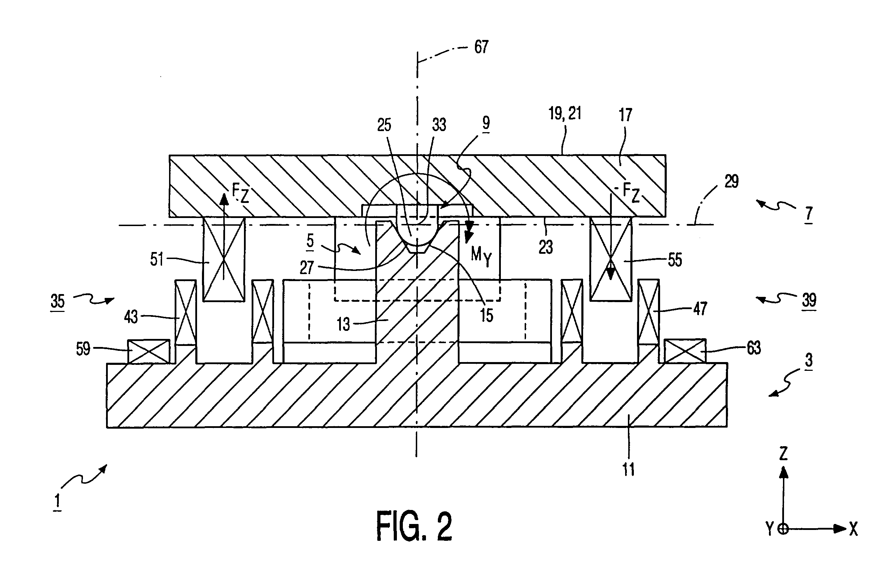

A radiation-beam manipulator 1 in accordance with the invention, as shown in Figs. 1 and 2, comprises a first part 3, which is provided with a first bearing portion 5, and a second part 7, which is provided with a second bearing portion 9 for cooperation with said first bearing portion 5. The first part 3 comprises a rectangular base plate 11 which is preferably made of a non-magnetizable material, such as, for example, aluminium, and extends parallel to an X-direction and a Y-direction which is perpendicular to said X-direction. The first bearing portion 5 includes a bearing support 13 which extends parallel to a support direction or Z-direction which is perpendicular to the X-direction and the Y-direction, and which is integrated into the base plate 11, and it further includes a conical thrust surface 15 which is preferably provided with a wear-resistant layer of, for example, polyoxymethylene. The second part 7 includes a plate-shaped support 17 which is also rectangular and also made of a non-magnetizable material, such as, for example, glass. The support 17 has a first main side 19 facing away from the first part 3, on which main side there is a mirror surface 21, and a second main side 23 facing the first part 3. The second bearing portion 9 is attached to the second main side 23 and includes a ball portion 25 of, for example, sapphire having a ball surface 27 for co-operation with the conical thrust surface 15 of the first bearing portion 5. By using the thrust surface 15 and the ball surface 27, the second part 7 with the mirror surface 21 is pivotably journaled about a first pivot axis 29 relative to the first part 3, which pivot axis extends parallel to the X-direction, and about a second pivot axis 31 which extends parallel to the Y-direction. Since the ball surface 27 is in an accurately defined position with respect to the conical thrust surface 15, viewed in a direction parallel to the X-direction and parallel to the Y-direction, the second part 7 with the minor surface 21 also is in an accurately defined position relative to the first part 3, viewed in a direction parallel to the X-direction and parallel to the Y-direction, and also the position of both pivot axes 29 and 31, which intersect in a point of intersection 33 which coincides with a center of the ball surface 27, is accurately defined viewed in a direction parallel to the X-direction and the Y-direction.

As is further shown in Figs. 1 and 2, the radiation-beam manipulator 1 comprises a system of actuators 35, 37, 39, 41 by means of which the second part 7 is pivotable, with respect to the first part 3, about the two pivot axes 29, 31. The system of actuators 35, 37, 39, 41 comprises a system of electric coils 43, 45, 47, 49, which is attached to the first part 3, and a first system of magnetizable elements 51, 53, 55, 57, which, for co-operation with the system of electric coils 43, 45, 47, 49, is attached to the second part 7. In the example of the radiation-beam manipulator 1 shown in Figs. 1 and 2, the system of actuators 35, 37, 39, 41 comprises four Z-actuators 35, 37, 39, 41, the first system of magnetizable elements 51, 53, 55, 57 being provided with a first pair of permanent magnets 51, 55 which are magnetized parallel to the Z-direction and, viewed parallel to the first pivot axis 29, are secured to the second main side 23 of the second part 7 at equal distances from and on either side of the second bearing portion 9, and with a second pair of permanent magnets 53, 57, which are also magnetized parallel to the Z-direction and, viewed parallel to the second pivot axis 31, are attached to the second main side 23 of the second part 7 at equal distances from and on either side of the second bearing portion 9, while the system of electric coils 43, 45, 47, 49 includes four electric coils 43, 45, 47, 49 which are secured onto the base plate 11 of the first part 3 for co-operation with, respectively, one of the four permanent magnets 51, 53, 55, 57. As shown in Fig. 1, the electric coil 43 and the permanent magnet 51 form a first Z-actuator 35, while the electric coil 45 and the permanent magnet 53 form a second Z-actuator 37, the electric coil 47 and the permanent magnet 55 form a third Z-actuator 39, and the electric coil 49 and the permanent magnet 57 form a fourth Z-actuator 41. In operation, electric currents or voltages are supplied to the electric coils 43, 45, 47, 49, the direction and size of said currents or voltages being adjustable by means of an electrical regulating system of the radiation-beam manipulator 1, which for the sake of simplicity is not shown in the Figures, which electrical regulating system is of a type which is known per se and generally used. If the coils 43 and 47 are supplied with currents which are equal in size yet act in opposite directions, the Z-actuators 35 and 39 exert, on the second part 7, two forces F_{z} and -F_{z}, which are equal in size and act in opposite directions and extend parallel to the Z-direction, so that the Z-actuators 35 and 39 exert, on the second part 7, a mechanical driving torque M_{y} about the second pivot axis 31, under the influence of which the second part 7 is pivoted about the second pivot axis 31. In a similar manner, the second part 7 can be pivoted by means of the Z-actuators 37 and 41 about the first pivot axis 29, the two Z-actuators 37 and 41 exerting a mechanical driving torque Mₓ about the first pivot axis 29. By means of said regulating system, a desirable pivot angle of the second part 7 about the two pivot axes 29 and 31 can be set by selectively energizing the four electric coils 43, 45, 47, 49, said regulating system co-operating with a measurement system, not shown either in the Figures for the sake of simplicity, which is of a type which is known per se and generally used, and which serves to measure said pivot angles. By applying both pairs of Z-actuators 35, 39 and 37, 41, relatively high mechanical torques Mₓ and M_{y} are achieved about the two pivot axes 29 and 31.

As shown in Figs. 1 and 2, the radiation-beam manipulator 1 further comprises a second system of magnetizable elements 59, 61, 63, 65 for co-operation with the first system of magnetizable elements 51, 53, 55, 57. In the example of the radiation-beam manipulator 1 shown in Figs. 1 and 2, the second system of magnetizable elements 59, 61, 63, 65 includes four magnetizable elements 59, 61, 63, 65 which are made of a magnetizable material, such as, for example, iron, and which are secured onto the base plate 11 of the first part 3 next to, respectively, one of the four electric coils 43, 45, 47, 49. The second system of magnetizable elements 59, 61, 63, 65 exerts, on the first system of magnetizable elements 51, 53, 55, 57, a magnetic pretension force which is directed substantially parallel to the Z-direction, and under the influence of which the ball surface 27 of the second bearing portion 9 is pretensioned in an accurately defined position against the thrust surface 15 of the first bearing portion 5, viewed in a direction parallel to the Z-direction. In this manner, the second part 7 is supported, relative to the first part 3, by the thrust surface 15 of the first bearing portion 5, viewed in a direction parallel to the Z-direction, and held in an accurately defined position, viewed in a direction parallel to the Z-direction, the second bearing portion 9 being pretensioned relative to the thrust surface 15, viewed in a direction parallel to the Z-direction, by means of said magnetic pretension force of the second system of magnetizable elements 59, 61, 63, 65. By using the thrust surface 15, the first part 3 and the second part 7 of the radiation-beam manipulator 1 in accordance with the invention can be readily separated from each other and re-assembled. For separating the two parts 3 and 7 from each other, both parts 3 and 7 should be separated from each other against said pretension force, viewed in a direction parallel to the Z-direction. The assembly of the two parts 3 and 7 also takes place in a simple manner by moving both bearing portions 5 and 9 towards each other, viewed in a direction parallel to the Z-direction, whereafter both parts 3 and 7 are held in an operational position relative to each other under the influence of said pretension force. Such a simple assembly and disassembly of both parts 3 and 7 is desirable because the mirror surface 21 must be regularly cleaned or even replaced as a result of contamination or ageing. By using the thrust surface 15 and the ball surface 27, both bearing portions 5 and 9 exert a relatively small frictional force upon each other, so that the accuracy and the rate with which the second part 7 can be pivoted about the two pivot axes 29 and 31 and positioned relative to the first part 3 is influenced as little as possible by said frictional force.

Apart from said magnetic pretension force, which is directed parallel to the Z-direction, both systems of magnetizable elements 51, 53, 55, 57 and 59, 61, 63, 65 also exert a magnetic torque M_{z} upon each other about a supporting axis 67 which extends parallel to the Z-direction and which is shown in Fig. 2. The size of the torque M_{z} depends upon a position which the second part 7 occupies relative to the first part 3, viewed about the supporting axis 67. In an equilibrium position shown in Fig. 1, in which the magnetizable elements 59, 61, 63, 65 of the second system of magnetizable elements 59, 61, 63, 65 are positioned substantially right opposite the permanent magnets 51, 53, 55, 57 of the first system of magnetizable elements 51, 53, 55, 57, said torque M_{z} is substantially zero. In the case of a rotation of the second part 7 relative to the first part 3 about the supporting axis 67 in, respectively, a positive direction and a negative direction, both systems of magnetizable elements 51, 53, 55, 57 and 59, 61, 63, 65 exert a torque M_{z} upon each other in, respectively, said negative direction and said positive direction, so that the above-mentioned rotation is counteracted by the torque M_{z}. Thus, the magnetic torque M_{z}, viewed about the supporting axis 67, has a stabilizing effect, so that under the influence of the torque M_{z} the second part 7 is held in position in the best way possible relative to the first part 3, viewed about the supporting axis 67. Thus, the second system of magnetizable elements 59, 61, 63, 65 has a dual function, so that a practical and efficient construction of the radiation-beam manipulator 1 is obtained.

It is noted that in accordance with the invention, at least one of the two systems of magnetizable elements 51, 53, 55, 57 and 59, 61, 63, 65 should include a system of permanent magnets. In the above-described example of the radiation-beam manipulator 1, the first system of magnetizable elements 51, 53, 55, 57 comprises, for co-operation with the system of electric coils 43, 45, 47, 49, a system of permanent magnets 51, 53, 55, 57, so that the system of actuators 35, 37, 39, 41 has a relatively high efficiency and provides relatively high driving torques Mₓ and M_{y} about the pivot axes 29 and 31. However, the invention also comprises embodiments in which both systems of magnetizable elements 51, 53, 55, 57 and 59, 61, 63, 65 include a system of permanent magnets, so that a relatively high magnetic torque M_{z} about the supporting axis 67 is achieved, or embodiments in which only the second system of magnetizable elements 59, 61, 63, 65 includes a system of permanent magnets. As a result, the expression "magnetizable" is to be taken to mean "magnetizable or permanently magnetic". In the above-described example of the radiation-beam manipulator 1 in accordance with the invention, the magnetizable elements 59, 61, 63, 65 of the second system of magnetizable elements 59, 61, 63, 65 are arranged next to, respectively, one of the four coils 43, 45, 47, 59 of the system of electric coils 43, 45, 47, 49. It is noted that, for co-operation with the first system of magnetizable elements 51, 53, 55, 57, the magnetizable elements 59, 61, 63, 65 of the second system of magnetizable elements 59, 61, 63, 65 may also be attached to the first part 3 at a different location, for example right below the four magnetizable elements 51, 53, 55, 57 of the first system of magnetizable elements 51, 53, 55, 57 in, respectively, one of the four electric coils 43, 45, 47, 49.

Since the ball part 25 of the second bearing portion 9 and the permanent magnets 51, 53, 55, 57 of the first system of magnetizable elements 51, 53, 55, 57 are attached to the second main side 23 of the support 17, the center of gravity of the second part 7 coincides substantially with the center of the ball surface 27 and the point of intersection 33 of the two pivot axes 29 and 31. As a result, relatively high-frequency natural vibrations of the radiation-beam manipulator 1 are precluded, which would develop as a result of elastic deformations of the second part 7 if said center of gravity and the point of intersection 33 would be in different positions. In this manner, it is achieved that the dynamic behavior of the radiation-beam manipulator 1 in accordance with the invention is hardly disturbed by undesirable natural vibrations not only at relatively low-frequency pivotal movements of the second part 7 but also at relatively high-frequency pivotal movements of said second part 7.

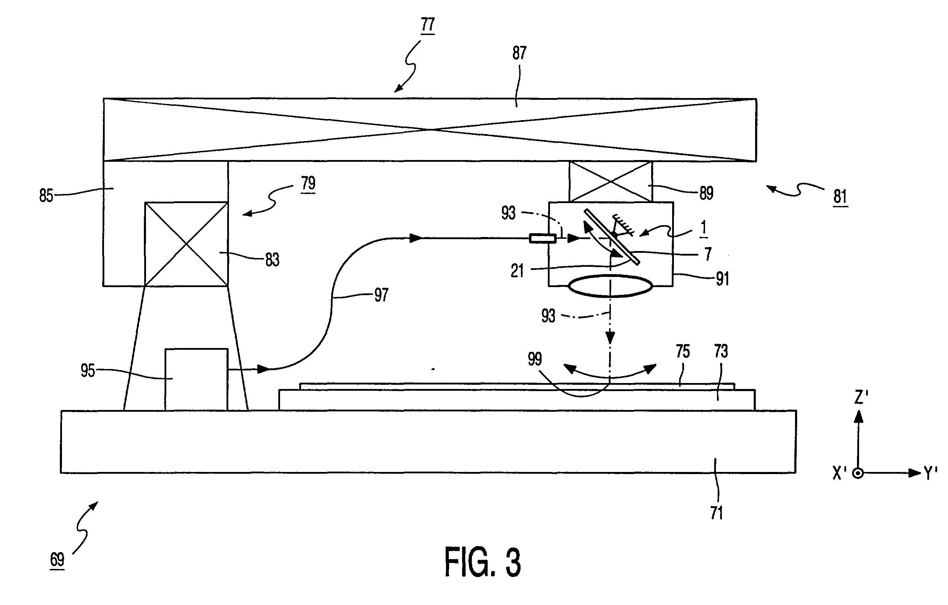

Fig. 3 schematically shows a laser-processing device 69 in accordance with the invention, which comprises a radiation-beam manipulator 1 in accordance with the invention. Said laser-processing device 69 includes a base 71 on which a holder 73 for a workpiece 75 to be processed is secured. The radiation-beam manipulator 1 used in the laser-processing device 69 can be moved relative to the holder 73 and the workpiece 75 by means of a positioning device 77 of the laser-processing device 69. In the example of the laser-processing device 69 shown in Fig. 3, the positioning device 77 comprises a first liner motor 79 and a second liner motor 81 which are of a type which is known per se and generally used. The first liner motor 79 includes a stator 83 which extends parallel to an X'-direction and is secured to the base 71, and a translator 85 which can be moved along the stator 83 in a direction parallel to the X'-direction. The second liner motor 81 also includes a stator 87, which extends parallel to a Y'-direction perpendicular to the X'-direction, and which is secured to the translator 85 of the first liner motor 79, and a translator 89, which can be moved along the stator 87 in a direction parallel to the Y'-direction. As shown in Fig. 3, the radiation-beam manipulator 1 is secured to the translator 89 of the second liner motor 81, so that the radiation-beam manipulator 1 can be moved, by means of the first liner motor 79 and the second liner motor 81, relative to the holder 73 and the workpiece 75 in a direction parallel to, respectively, the X'-direction and the Y'-direction. It is noted that the invention also includes laser-processing devices which are provided with a different type of positioning device, for example a positioning device comprising a rotatable robot arm or a positioning device comprising three linear motors for generating displacements in three mutually perpendicular directions.

As Fig. 3 further shows, the radiation-beam manipulator 1 is arranged in a housing 91 which is secured to the translator 89 of the second linear motor 81. By means of the radiation-beam manipulator 1, a laser beam 93, which is supplied by a laser source 95 and guided via a flexible guide 97 to the housing 91, can be deflected, in operation, towards the workpiece 75 present on the holder 73, so that the workpiece 75 can be processed by means of the laser beam 93. An example of such a treatment is a laser-welding operation, a laser-cutting operation or a so-called laser-adjusting operation, in which two or more parts of the workpiece 75 are accurately positioned relative to each other by locally heating the workpiece 75 by means of the laser beam 93. Since the second part 7, with the mirror surface 21, of the radiation-beam manipulator 1 can be pivoted about the two mutually perpendicular pivot axes 29, 31, a processing spot 99, which is formed by the laser beam 93 on the workpiece 75, can be positioned, by means of the radiation-beam manipulator 1, over limited distances parallel to the X'-direction and the Y'-direction on the workpiece 75, so that at least a part of the workpiece 75 can be processed by means of exclusively pivotal movements of the second part 7 of the radiation-beam manipulator 1. By moving the radiation-beam manipulator 1 relative to the workpiece 75 by means of the positioning device 77, also other pans of the workpiece 75 can be processed by means of the laser beam 93.

In the above-described example of the radiation-beam manipulator 1 in accordance wit the invention, the second part 7 is pivotable, relative to the first part 3, about the two mutually perpendicular pivot axes 29 and 31. It is noted that the invention also includes radiation-beam manipulators in which the second part can only be pivoted about a single pivot axis relative to the first part. In such a radiation-beam manipulator comprising a single pivot axis, the first bearing portion includes, for example, a V-shaped thrust surface which extends parallel to the pivot axis, and the second bearing portion includes, for example, two ball parts which, viewed parallel to the pivot axis, are attached at some distance from each other to the second part for co-operation with the V-shaped thrust surface.

It is further noted that the above-described radiation-beam manipulator 1 in accordance with the invention may also be provided with other types of bearing portions, such as, for example, a first bearing portion having a conical trust surface and a second bearing portion having a conical thrust pin with an apex angle of the cone which is smaller than an apex angle of the cone of the thrust surface.

Finally, it is noted tat a radiation-beam manipulator in accordance with the invention cannot only be used in an above-described laser-processing device but also in other types of devices in which a radiation beam is to be deflected in an alternating manner. An example of such a device is a scanner for scanning bar codes or dot codes, or other types of scanners, for example, for scanning text.

## Claims

1. A radiation-beam manipulator comprising a first part, which includes a first bearing portion, and a second part, which includes a mirror and a second bearing portion for co-operation with said first bearing portion, said second part being pivotably journaled relative to the first part about at least one pivot axis by means of the two bearing portions, and being pivotable relative to the first part about the pivot axis by means of a system of actuators, said system of actuators being provided with a system of electric coils, which is attached to one of said parts, and with a first system of magnetizable elements which, for co-operation with the system of electric coils, is attached to the other part, characterized in that one of the two bearing portions is provided with a thrust surface by means of which the second part is supported, relative to the first part, in a direction parallel to a support direction extending perpendicularly to the pivot axis, while the other bearing portion is pretensioned, parallel to the support direction, relative to the thrust surface by means of a second system of magnetizable elements which, for co-operation with the first system of magnetizable elements, is attached to the part to which the electric coil system is attached, at least one of the two systems of magnetizable elements comprising a system of permanent magnets.

2. A radiation-beam manipulator as claimed in claim 1, characterized in that the first system of magnetizable elements includes a system of permanent magnets.

3. A radiation-beam manipulator as claimed in claim 1 or 2, characterized in that the second part comprises a plate-shaped support having a first main side, which is provided with a mirror surface, and a second main side, to which the second bearing portion and the first system of magnetizable elements are attached.

4. A radiation-beam manipulator as claimed in claim 1, 2 or 3, characterized in that the second part is pivotable, relative to the first part, about two mutually perpendicular pivot axes, the thrust surface being conical, while the other bearing portion includes at least a pan of a ball surface for co-operation with the conical thrust surface.

5. A radiation-beam manipulator as claimed in claim 2 or 3, characterized in that the second part is tiltable, relative to the first part, about two mutually perpendicular pivot axes, the first system of magnetizable elements being provided with a first pair of permanent magnets, which are magnetized parallel to the support direction and, viewed parallel to one of the two pivot axes, are attached, equidistantly from and on either side of the second bearing portion, to the second part, and a second pair of permanent magnets which are magnetized parallel to the support direction and, viewed parallel to the other pivot axis, are attached, equidistantly from and on either side of the second bearing portion, to the second part, while the system of electric coils includes four electric coils which are attached to the first part for co-operation with, respectively, one of the four permanent magnets, and the second system of magnetizable elements includes four magnetizable elements which are attached to the first part near, respectively, one of the four electric coils.

6. A laser-processing device comprising a holder, a laser source, a radiation-beam manipulator for deflecting a radiation beam supplied, in operation, by the laser source towards a workpiece which can be arranged on the holder during operation, and a positioning device for positioning the holder and the radiation-beam manipulator relative to each other, characterized in that the radiation-beam manipulator is a radiation-beam manipulator as claimed in claim 1, 2, 3, 4 or 5.
